Europäisches Patentamt

European Patent Office

Office européen des brevets

(19)

(11) Veröffentlichungsnummer: **0 312 674 B1**

(12) **EUROPÄISCHE PATENTSCHRIFT**

(45) Veröffentlichungstag der Patentschrift: **19.08.92**

(21) Anmeldenummer: **87710018.0**

(22) Anmeldetag: **23.10.87**

(51) Int. Cl.⁵: **B23H 7/08**

(54) **Erodierelektrode, insbesondere Drahtelektrode für die funkenerosive Bearbeitung.**

(43) Veröffentlichungstag der Anmeldung:
**26.04.89 Patentblatt  89/17**

(45) Bekanntmachung des Hinweises auf die
Patenterteilung:
**19.08.92 Patentblatt  92/34**

(84) Benannte Vertragsstaaten:
**AT BE CH DE ES FR GB GR IT LI LU NL SE**

(56) Entgegenhaltungen:
**EP-A- 0 185 492**
**CH-A- 646 083**

(73) Patentinhaber: **Berkenhoff GmbH**
**Eduard-Berkenhoff-Strasse 14**
**W-6301 Heuchelheim-Kinzenbach(DE)**

(72) Erfinder: **Groos, Heinrich**
**Hainstrasse 20**
**W-6348 Herborn(DE)**
Erfinder: **Hermanni, Hans**
**Ringstrasse 15**
**W-6349 Sinn-Fleisbach(DE)**

(74) Vertreter: **Missling, Arne, Dipl.-Ing.**
**Patentanwalt Bismarckstrasse 43**
**W-6300 Giessen(DE)**

**Beschreibung**

Die Erfindung betrifft ein Verfahren zur Herstellung einer Erodierelektrode, insbesondere einer Drahtelektrode für das funkenerosive Schneiden von leitenden Stoffen, mit einer Seele aus Kupfer oder einer Kupferlegierung auf der vor der thermischen Behandlung eine Mantelschicht aus Zink aufgebracht ist, wobei die Erodierelektrode nach dem Aufbringen der Mantelschicht einer thermischen Behandlung ausgesetzt ist, so daß eine vom Außenrand der Mantelschicht zur Seele hin reichende Kupfer-Zink-Legierung entsteht.

Aus der CH-A5-646 083 ist eine Erodierelektrode bekannt, die aus einem Kern mit einer guten elektrischen Leitfähigkeit sowie einer Mantelschicht aus einer Legierung aus Nikkel und Zink besteht. Der Zinkgehalt der Mantelschicht nimmt zur Außenseite der Schicht hin zu. Dieser unterschiedliche Zinkgehalt in der Mantelschicht wird durch eine Wärmebehandlung und Diffusion des Zinkes erhalten.

Aus der EP-A-185 492 ist eine Drahtelektrode für das funkenerosive Schneiden bekannt, die aus einem kupferummantelten Kern sowie einer Mantelschicht aus einer Kupfer-Zink-Legierung besteht. Die Mantelschicht hat eine Stärke von 0,1 bis 0,15 $\mu$m. Der Kupferanteil des Querschnittes des Kernes liegt zwischen 10 und 70 %. Der Zinkanteil in der Kupfer-Zink-Legierung der Mantelschicht nimmt zur Außenseite der Mantelschicht hin ständig zu, wobei der mittlere Gehalt des Zinkes in der Kupfer-Zink-Legierung weniger als 50 %, jedoch nicht weniger als 10 % beträgt. Hierdurch bilden sich in der Mantelschicht in Abhängigkeit des jeweiligen Kupfer-Zink-Verhältnisses Alpha-, Beta- und Gamma-Phasen und die entsprechenden Mischphasen. Es wird zwar eine relativ verschleißfeste Drahtelektrode erhalten, jedoch weist diese bekannte Drahtelektrode eine relativ geringe Schneidleistung auf, die zum einen aus der verringerten Leitfähigkeit der Mantelschicht und zum anderen aus einem unregelmäßigen Funkenübergang herrührt.

Beim elektroerosiven Drahtschneiden eines Werkstückes wird eine kontinuierliche drahtartige, fadenförmige oder ähnlich längliche Elektrode großer Länge axial von einer Zufuhrseite zu einer Aufnahmeseite durch einen Schneidbereich eines Werkstückes transportiert, der mit einer Bearbeitungsflüssigkeit dielektrischer Natur oder einem Elektrolyten geeigneter Leitfähigkeit gespült ist.

Ein elektrischer Bearbeitungsstrom fließt zwischen der durchlaufenden Drahtelektrode und dem Werkstück über einen dazwischen gebildeten Bearbeitungsspalt geringer Größe.

Als durchlaufende längliche Elektrode wird aus herstellungstechnischen Gründen bisher ein Draht aus einem elektrisch leitenden Material verwendet, z. B. aus Kupfer, Messing, Stahl, Molybdän, Wolfram oder einem anderen Metall bzw. Metallegierung oder auch sogenannte Manteldrähte mit einer Seele und mit Mantelschichten aus Metallen und Metallegierungen mit niedriger Verdampfungstemperatur. Diese Materialien erfüllen nur bedingt die Anforderungen, die an die Elektrode beim elektroerosiven Drahtschneiden gestellt werden und zwar auch dann, wenn der Zinkgehalt der Mantelschicht von der Außenseite zum Kern hin variiert.

Die elektrische Entladungsenergie verdampft nicht nur das Werkstückmaterial, was gefordert ist, sondern auch in erheblicher Weise die durchlaufende Elektrode, was zu Maßungenauigkeiten führt.

Es ist daher Aufgabe der Erfindung, eine Erodierelektrode mit einer Mantelschicht der eingangs genannten Art, insbesondere eine Drahtelektrode vorzuschlagen, die in ihrer äußeren Mantelschicht einen Gefügeaufbau hat, der einen vielfach größeren Widerstand gegenüber erosivem Abtrag aufweist wie die herkömmliche Erodierelektrode und eine bessere Abtragsleistung sowie ein besseres Schneidverhalten besitzt.

Diese Aufgabe wird mit den Merkmalen des Anspruches 1 gelöst.

Der Grund für die hohe Standfestigkeit der erfindungsgemäßen Erodierelektrode besteht darin zum einen, daß mit dem erfindungsgemäßen Verfahren Mantelschichten aus Legierungen erzeugt werden können, die konventionell durch Kaltverformung nicht herstellbar sind und die bei Kupfer-Zink-Legierungen kubisch raumzentrierte Kristalle der Beta-Phase bilden, die gegenüber somit möglichen kubisch-flächenzentrierten Alpha-Kristallen wesentlich stabiler im Abtragsverhalten sind. Durch die definierte Abkühlung der Beta-Phase und damit der Stabilisierung der Beta-Phase auch bei Raumtemperatur wird zudem eine geringe Störstellenzahl innerhalb der Mantelschicht erhalten, was das Erodierverhalten weiter verbessert.

Das Besondere der Erfindung ist, daß gerade diese harte und spröde Phase, die in ihrer allgemeinen technischen Bedeutung bei der spanlosen Umformung unerwünscht sind, bei den Entladungsimpulsen sich als sehr verschleißfest herausgestellt hat und gleichzeitig die Ionisierbarkeit des Entladekanals verbessern.

Es ist bekannt, daß mit moderneren Funkenerosions-Drahtschneideanlagen hochenergiereiche Impulse erzeugt werden, die bei den bisher verwendeten Elektroden einen hohen Verschleiß verursachen. Die durchlaufende Elektrode verliert dadurch an Maßgenauigkeit. Da es sich bei der Funkenerosionstechnologie um ein abbildendes Verfahren handelt und der Abstand Werkstück - Elektrode immer gleich bleibt, führt die Maßungenauigkeit der Elektrode gleichzeitig zur Maßungenauigkeit des zu bearbeitenden Werkstücks. Dies wird mit einer Elektrode gemäß der Erfindung vermieden.

Die gezielte Wärmebehandlung und eine definierte Abkühlphase erzeugt die Gefügestruktur auf der bereits mit Metall mit niedriger Verdampfungsenergie beschichteten Elektrode. Bei Kupfer-Zink-Legierungen beträgt die Wärmebehandlungstemperatur von 454° bis 902° C.

## Patentansprüche

1. Verfahren zur Herstellung einer Erodierelektrode, insbesondere einer Drahtelektrode für das funkenerosive Schneiden von leitenden Stoffen, mit einer Seele aus Kupfer oder einer Kupferlegierung auf der vor der thermischen Behandlung eine Mantelschicht aus Zink aufgebracht ist, wobei die Erodierelektrode nach dem Aufbringen der Mantelschicht einer thermischen Behandlung ausgesetzt ist, so daß eine vom Außenrand der Mantelschicht zur Seele hin reichende Kupfer-Zink-Legierung entsteht, dadurch gekennzeichnet, daß die thermische Behandlung derart vorgenommen wird, daß die Haltezeit für die thermische Behandlung so lange ansteht, daß eine vollständige Auflegierung der Mantelschicht erfolgt und in dem verschleißenden Teil der Mantelschicht nur eine Beta-Phase entsteht und daß diese Beta-Phase durch eine definierte Abkühlung fixiert wird.

2. Verfahren nach Anspruch 1, dadurch gekennzeichnet, daß die Diffusionstemperaturen für die thermische Behandlung in Abhängigkeit der gewünschten Stärke und Ausbildung der Schichten zwischen 454° bis 902° C liegen.

3. Verfahren nach Anspruch 2, dadurch gekennzeichnet, daß die Abkühlzeit zwischen 20 und 50 % der Haltezeit beträgt.

4. Verfahren nach einem der Ansprüche 1 bis 3, dadurch gekennzeichnet, daß die thermische Behandlung in einem kontinuierlichen Verfahren erfolgt.

5. Verfahren nach einem der Ansprüche 1 bis 4, dadurch gekennzeichnet, daß die Drahtelektrode vor der thermischen Behandlung durch plastische Verformung in etwa auf den Enddurchmesser gebracht wird.

6. Verfahren nach Anspruch 5, dadurch gekennzeichnet, daß die Erodierelektrode nach der thermischen Behandlung kalibriert wird.

## Claims

1. A method for producing an erosion electrode, in particular a wire electrode for the electrical discharge cutting of conductive materials, with a core made of copper or a copper alloy on which a coating layer of zinc is applied before the heat treatment, the erosion electrode being subjected to a heat treatment after application of the coating layer, producing a copper-zinc alloy which extends from the outer margin of the coating layer to the core, characterised in that the heat treatment is conducted such that the critical time for the heat treatment lasts until complete alloying-on of the coating layer takes place and only a Beta-phase is formed in the part of the coating layer which wears away, and in that this Beta-phase is fixed by a defined cooling down process.

2. A method according to claim 1, characterised in that the diffusion temperatures for the heat treatment lie between 454° to 902° C, subject to the desired thickness and formation of the layers.

3. A method according to claim 2, characterised in that the cooling down period equals between 20 and 50 % of the critical time.

4. A method according to one of claims 1 to 3, characterised in that the heat treatment takes place in a continuous process.

5. A method according to one of claims 1 to 4, characterised in that the wire electrode is brought approximately to the final diameter by plastic deformation before the heat treatment.

6. A method according to claim 5, characterised in that the erosion electrode is calibrated after the heat treatment.

## Revendications

1. Procédé de fabrication d'une électrode d'érosion, en particulier d'un fil électrode pour couper par électroérosion des matériaux conducteurs, comportant une âme en cuivre ou alliage de cuivre, sur laquelle, avant le traitement thermique, est déposée une gaine extérieure en zinc, étant entendu qu'après qu'a été déposée la gaine extérieure, l'électrode d'érosion est soumise à un traitement thermique de telle façon qu'il en résulte un alliage cuivre-zinc s'étendant depuis le bord extérieur de la gaine extérieure jusqu'à l'âme, caractérisé en ce qu'on a programmé le traitement thermique de telle façon que la durée de maintien du traitement thermique est maintenue assez longtemps pour obtenir une transformation complète en alliage de la gaine extérieure et pour que, dans la zone soumise à usure de la gaine extérieure, il se crée une phase béta, et en ce que cette phase béta est fixée au moyen d'un refroidissement programmé.

2. Procédé suivant la revendication 1, caractérisé en ce que les températures de diffusion pour le traitement thermique, en fonction de l'épaisseur et de la constitution souhaitées de la couche, sont comprises entre 454° et 902° C.

3. Procédé suivant la revendication 2, caractérisé en ce que la durée de refroidissement est de 20 à 50 % du temps de maintien.

4. Procédé suivant l'une quelconque des revendications 1 à 3, caractérisé en ce que le traitement thermique se fait suivant un procédé en continu.

5. Procédé suivant l'une quelconque des revendications 1 à 4, caractérisé en ce que le fil électrode, avant le traitement thermique, est porté sensiblement au diamètre définitif par déformation plastique.

6. Procédé suivant la revendication 5, caractérisé en ce que l'électrode d'érosion est calibrée après le traitement thermique.